(19) **Europäisches Patentamt / European Patent Office / Office européen des brevets**

(11) **EP 1 055 230 B1**

(12) **EUROPEAN PATENT SPECIFICATION**

(45) Date of publication and mention
of the grant of the patent:
**12.09.2007 Bulletin 2007/37**

(51) Int Cl.:
***G11B 7/12*** *(2006.01)* ***G11B 7/135*** *(2006.01)*

(21) Application number: **99962177.4**

(22) Date of filing: **29.11.1999**

(86) International application number:
**PCT/EP1999/009255**

(87) International publication number:
**WO 2000/034949 (15.06.2000 Gazette 2000/24)**

(54) **DEVICE FOR OPTICALLY SCANNING A RECORD CARRIER**

VORRICHTUNG ZUR OPTISCHEN ABTASTUNG EINES AUFZEICHNUNGSTRÄGERS

DISPOSITIF DE BALAYAGE OPTIQUE D'UN SUPPORT D'ENREGISTREMENT

(84) Designated Contracting States:
**AT BE DE FR GB**

(30) Priority: **10.12.1998 EP 98204168**

(43) Date of publication of application:
**29.11.2000 Bulletin 2000/48**

(73) Proprietor: **Koninklijke Philips Electronics N.V.
5621 BA Eindhoven (NL)**

(72) Inventors:
• **HENDRIKS, Bernardus, H., W.
NL-5656 AA Eindhoven (NL)**

• **BRAAT, Josephus, J., M.
NL-5656 AA Eindhoven (NL)**

(74) Representative: **van der Veer, Johannis Leendert
et al
Philips
Intellectual Property & Standards
P.O. Box 220
5600 AE Eindhoven (NL)**

(56) References cited:
**EP-A- 0 727 777          EP-A- 0 910 074
DE-A- 19 910 109        US-A- 5 691 971
US-A- 5 764 613          US-A- 5 936 928**

Printed by Jouve, 75001 PARIS (FR)

**Description**

The invention relates to an optical scanning device for optically scanning a first and second type of record carrier, the first type of record carrier comprising a first information layer and a first transparent layer having a first thickness, the second type of record carrier comprising a second information layer and a second transparent layer having a refractive index $n_1$ and a second thickness larger than the first thickness, the device comprising an objective lens and a convex lens for converging a radiation beam through the first or second transparent layer to a focus on the information layer, and means for axially positioning the convex lens, the convex lens having a convex surface facing the objective lens, a substantially planar surface facing the transparent layer, a magnifying power and a refractive index $n_2$.

The amount of information that can be stored on an optical record carrier depends inter alia on the size of the radiation spot formed by the scanning device on the information layer of the record carrier. The information density and hence the amount of stored information can be increased by decreasing the size of the spot. The spot size can be reduced by increasing the numerical aperture of the radiation beam forming the spot. When using a single objective lens, such an increase of the numerical aperture is in general accompanied by a decrease of the free working distance of the lens forming the radiation beam, i.e. the smallest distance between the record carrier and the lens. At higher numerical apertures, the manufacturing costs of such objective lenses become high, the field of the lens reduces and the dispersion of the material the lens is made of gives increasing problems. The problems may be mitigated by inserting a convex lens between the objective lens and the record carrier. The convex lens may be plano-convex. The convex lens may be a slider lens or a solid immersion lens, and may be arranged at a very small distance above the record carrier by means determining its axial position, i.e. its position along the optical axis of the lens. Larger distances are also possible. The total convergence of the radiation beam is distributed over the objective lens and the plano-convex lens. An advantage of the use of the plano-convex lens is that it hardly adds aberrations to the radiation beam.

A scanning device having such a plano-convex lens is known from the European patent application no. 0 727 777. The device comprises an optical head in which an objective lens and a plano-convex lens converge a radiation beam to a numerical aperture (NA) of 0.84 for scanning the record carrier through a transparent layer. The plano-convex lens is arranged at a small height above the record carrier. The lens may be mounted on a slider in sliding contact with the record carrier or floating on a thin air layer. The lens has a free working distance of several micrometers. It is a disadvantage of the known device, that, when the scanning is changed to a record carrier having a transparent layer with a greater thickness, the free working distance will reduce considerably. For some embodiment it appears to change from 300 to 125 $\mu$m when changing the thickness of the transparent layer from 100 to 600 $\mu$m. Such a reduction requires a height of the plano-convex lens that can be adjusted in dependence on the type of record carrier to be scanned. It also affects the dynamic behaviour of the plano-convex lens, in particular the behaviour of the servo controlling the axial position and/or the tilt of the lens and increases the risk of collisions between the optical head and the record carrier.

Further relevant optical scanning devices are disclosed by US 5 691 971 A and US 5 764 613 A.

It is an object of the invention to provide a scanning device for scanning two types of record carrier with a high numerical aperture radiation beam that does not have the above disadvantages.

The object is achieved in accordance with the invention by a scanning device as described in the opening paragraph, which is characterized in that the magnifying power of the convex lens is substantially equal to $l/n_1$ and the means maintain the distance between the convex lens and the record carrier at a predetermined value. The scanning device has the advantage that the distance between the convex lens and the record carrier has substantially the same value for the first and second type of record carrier. Hence, the same suspension of the plano-convex lens can be used for both types of record carrier, thereby simplifying the design of the scanning device and improving the tolerance to crashes of the optical head of the scanning device into the record carrier. The servo system of the scanning device for axially positioning the objective lens and/or the convex lens can be relatively simple. The servo system must adjust the position of the objective lens such that the radiation beam is focused on an information layer and it must keep the distance between the convex lens and the record carrier at a constant value. The servo system does not required different settings for different record carriers. It is an advantage of the scanning device according to the invention, that spherical aberration compensation is automatically adjusted to the record carrier being scanned.

The magnifying power is preferably $l/n_1$ when scanning the type of record carrier requiring the largest numerial aperture (NA). This is, in general, the type of record carrier having the thinnest transparent layer. When the refractive index of the transparent layer is in a range between 1.5 and 1.6, then the magnification is in a range between 0.625 and 0.667, i.e. 0.646 $\pm$ 0.021.

The invention also relates to an optical scanning device for optically scanning a record carrier comprising at least two superjacent information layers and a transparent spacer layer having a refractive index $n_1$ arranged between the information layers, the device comprising an objective lens and a convex lens for converging a radiation beam to a focus on one of the information layers, and means for axially positioning the convex lens, the convex lens having a convex surface facing the objective lens, a substantially planar surface facing the transparent layer, a magnifying power and a refractive index $n_2$, characterized in that the magnifying power of the convex lens is substantially equal to $l/n_1$,

and the means maintain the distance between the convex lens and the record carrier at a predetermined value. When changing the scanning from one information layer to another one, the axial position of the objective lens must be changed to move the focus of the radiation beam to the desired information layer, whereas the distance between the convex lens and the entrance face of the record carrier, also called 'gap', need not be changed. Since the distance between the convex lens and the entrance surface of the record carrier can be kept at a fixed value, the construction of the optical head of the scanning device is simplified.

The refractive index $n_1$ of the transparent layer is preferably larger than the refractive index $n_2$ of the convex lens. The spherical aberration caused by the gap between the convex lens, having a refractive index lower than $n_2$, and the transparent layer, having a refractive index larger than $n_2$, at least partly compensate one another. The amount of spherical aberration to be introduced by the objective lens is then reduced, which in turn further increases the mentioned positional tolerance. The refractive indices are preferably related through $(n_1-1) > 1.03 (n_2-1)$.

To obtain a minimum spherical aberration at the location of the focus, the size of the gap, $d_{gap}$, depends preferably on the refractive index $n_2$ of the convex lens and $n_1$ of the transparent substrate according to the following relation:

$$d_{gap}/d_s = (n_2/n_1^3)*(n_1^2-n_2^2)/(n_2^2-1).$$ The value of $d_{gap}$ preferably complies with the relation within 40% for values of $d_s$ larger than $d_{gap}$, where $d_s$ is the thickness of the transparent layer.

The value of $d_s$ is preferably larger than the value of $d_{gap}$ in order to obtain refractive indices of available materials.

The product of the magnifying power and the refractive index $n_1$ lies preferably within a range from 0.95 to 1.05.

The objects, advantages and features of the invention will be apparent from the following more particular description of preferred embodiments of the invention, as illustrated in the accompanying drawings.

Figure 1 shows a scanning device;
Figure 2 shows an objective lens and a convex lens;
Figure 3 shows three different types of record carrier; and
Figure 4 shows an embodiment of an objective lens and a plano-convex lens.

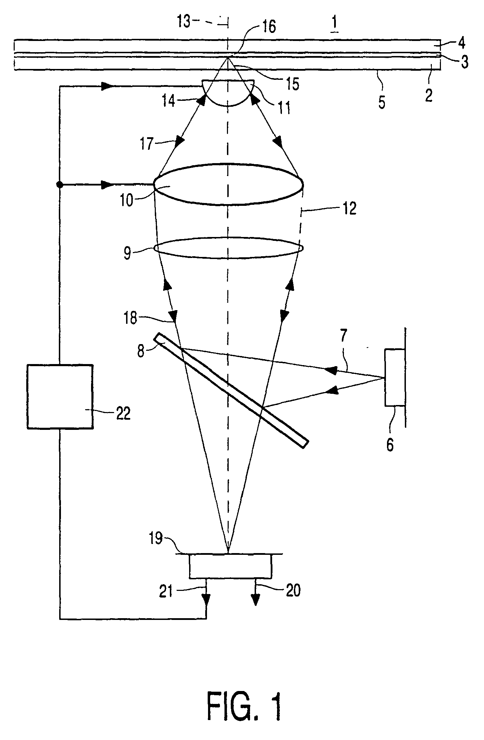

Figure 1 shows a device for scanning an optical record carrier 1. The record carrier comprises a transparent layer 2, on one side of which an information layer 3 is arranged. The side of the information layer facing away from the transparent layer is protected from environmental influences by a protection layer 4. The side of the transparent layer facing the device is called the entrance face 5. The transparent layer 2 acts as a substrate for the record carrier by providing mechanical support for the information layer. Alternatively, the transparent layer may have the sole function of protecting the information layer, while the mechanical support is provided by a layer on the other side of the information layer, for instance by the protection layer 4 or by a further information layer and transparent layer connected to the information layer 3. Information may be stored in the information layer 3 of the record carrier in the form of optically detectable marks arranged in substantially parallel, concentric or spiral tracks, not indicated in the Figure. The marks may be in any optically readable form, e.g. in the form of pits, or areas with a reflection coefficient or a direction of magnetization different from their surroundings, or a combination of these forms.

The scanning device comprises a radiation source 6, for example a semiconductor laser, emitting a diverging radiation beam 7. A beam splitter 8, for example a semitransparent plate, reflects the radiation towards a lens system. The lens system comprises a collimator lens 9, an objective lens 10 and a convex lens 11. The collimator lens 9 changes the diverging radiation beam 7 to a collimated beam 12. The objective lens 10, having an optical axis 13, transforms the collimated radiation beam 12 into a converging beam 14 incident on the lens 11. The collimator lens 9 and the objective lens 10 may be combined into a single lens. The convex lens 11 changes the incident beam 14 into a converging beam 15, which comes to a focus 16 on the information layer 3. The convex lens 11 has a convex surface and a substantially flat surface, i.e. the lens 11 is a plano-convex lens. The flat surface may have an aspheric profile without significant optical strength. The flat surface may have a curvature, e.g. for aero-dynamic purposes, the curvature being sufficiently small not to affect significantly the optical performance of the convex lens. The flat surface faces the transparent layer 2 and forms a gap between the lens and the layer. Although the objective lens 10 is indicated in the Figure as a single lens element, it may comprise more elements, and may also comprise a hologram operating in transmission or reflection, or a grating for coupling radiation out of a waveguide carrying the radiation beam. Radiation of the converging beam 15 reflected by the information layer 3 forms a reflected beam 17, which returns on the optical path of the forward converging beam 14. The objective lens 10 and the collimator lens 9 transform the reflected beam 17 to a converging reflected beam 18, and the beam splitter 8 separates the forward and reflected beams by transmitting at least part of the reflected beam 18 towards a detection system 19. The detection system captures the radiation and converts it into one or more electrical signals. One of these signals is an information signal 20, the value of which represents the information read from the information layer 3. Another signal is a focus error signal 21, the value of which represents the axial difference in height between the focus 16 and the information layer 3. The focus error signal is used as input for a focus servo controller 22, which controls the axial position of the objective lens 10 and/or the convex lens 11, thereby controlling the axial position of the focus 16 such that it coincides substantially with the plane of the information layer 3. The part of the detection system, including one or more radiation-sensitive detection elements and an electronic circuit processing the output signal of the detection elements, used for generating the focus error is called the focus error detection system. The focus servo system for positioning the lens system comprises the focus error detection system, the focus servo controller and an actuator for moving the lens system.

The gap, i.e. the distance between the planar surface of lens 11 and the entrance surface 5 of the record carrier 1, should be maintained substantially at a nominal value, independent of the type of record carrier and of the position of the information layer in the record carrier. This can be attained by using a passive air bearing construction carrying lens 11 and designed to maintain the gap at its nominal value. It is also possible to use an optically derived error signal which represents the deviation of the actual gap from its nominal value; a special actuator then keeps the plano-convex lens at its prescribed distance from the transparent layer by using the error signal as an input signal for the actuator servo loop. The actuator of the lens 10 is controlled by the focus error signal 21 to keep the focus 16 on the information layer 3.

The spherical aberration which arises when the radiation beam has to be focused through a transparent layer which is thicker than the design thickness of the layer, is compensated for by a focusing action of the objective lens. The focusing action causes the plano-convex lens to produce, due to the changing magnification, an amount of spherical aberration which cancels the aberration produced by the thicker transparent layer. During the focusing action of the objective lens, the gap should be maintained substantially at its nominal value in the above-mentioned way. The variations in the thickness of the transparent layer of a record carrier are in general of the order of a few percent of the nominal thickness, e.g. less than 10 $\mu$m for a nominal layer thickness of 100 $\mu$m. The variations for particular applications are within 3 $\mu$m p-p.

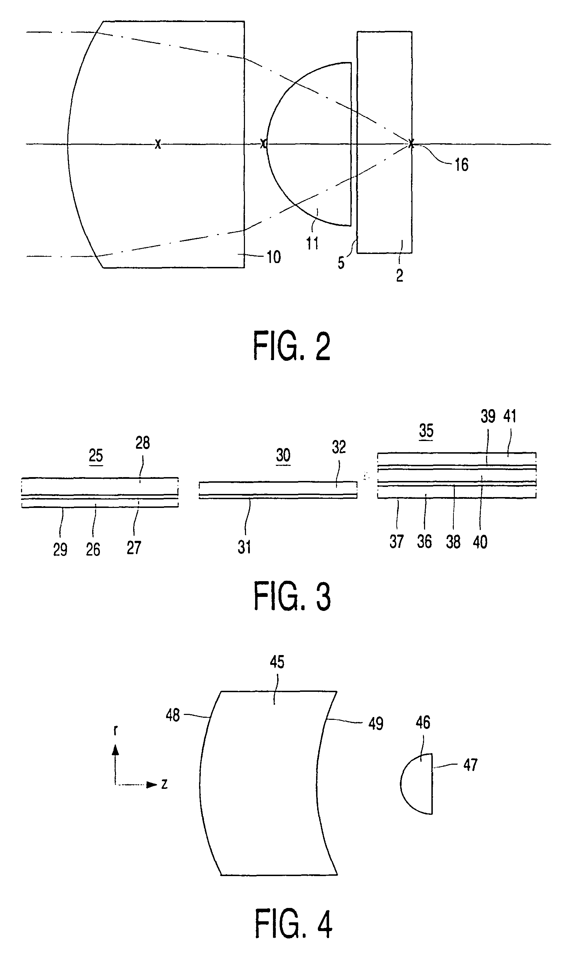

Figure 2 shows an enlargement of the objective lens 10 and the plano-convex lens 11. The objective lens 10 may be a mono-aspherical plano-convex lens or a bi-aspherical lens . The objective lens 10 is designed in a known way to compensate for the spherical aberration introduced by the convex lens 11 and the transparent layer 2, thereby making the radiation beam near the focus 16 nominally substantially free from spherical aberration.

The tolerance of the optical head for thickness variations of the transparent layer 2 can be relatively large if the magnifying power B of the plano-convex lens 11 is made substantially equal to $l/n_1$, i.,e. the inverse of the refractive index of the transparent layer. This can be understood as follows. When the distance between lens 10 and lens 11 changes, the conjugate distances of lens 11 change. If the image conjugate of lens 11 changes by an amount of $\Delta l$, the spherical aberration W in the radiation beam 15 changes by

$$-\Delta W_1 = \frac{1}{8}(1 - B^2)\, NA^4\, \Delta l$$

The spherical aberration introduced by a change $\Delta d_1$ in the thickness of the transparent layer 2 into the radiation beam 15 is equal to

$$\Delta W_2 = -\frac{1}{8}\frac{1}{n_1^3}(1 - n_1^2)\, \Delta d_1\, NA^4$$

If the image conjugate of lens 11 changes by $\Delta l$ and the thickness of the transparent layer by $\Delta d_1$, then the distance $d_2$ between the lens 11 and the entrance face of the record carrier must change by $\Delta d_2$ to keep the focus of the radiation beam on the information layer, where

$$\Delta l = \Delta d_2 + \frac{\Delta d_1}{n_1}$$

The spherical aberration introduced by the thickness variation may be compensated by choosing $\Delta W_1 = -\Delta W_2$, resulting in a value of $\Delta l$ equal to

$$\Delta l = -\frac{1}{n_1^3} \frac{(1 - n_1^2)}{1 - B^2} \Delta d_1$$

The resulting change $\Delta d_{gap}$ in the distance $d_{gap}$ between the flat surface of the plano-convex lens 11 and the entrance face 5 of the transparent layer 2 is

$$\Delta d_{gap} = -\frac{\Delta d_1}{n_1} + \Delta l = -\frac{\Delta d_1}{n_1} \left[ 1 + \frac{(1/n_1^2 - 1)}{1 - B^2} \right]$$

The term between square brackets can be made zero by taking the value of B equal to $l/n_1$. In that case the change $\Delta d_{gap}$ in the distance $d_{gap}$ is in this approximation independent of the variations $\Delta d_1$ in the thickness of the transparent layer 2. In other words, the free working distance of lens 11 is independent of the thickness of the transparent layer.

The scanning device is designed for scanning two different types of record carrier. Figure 3 shows the first type of record carrier 25, comprising a transparent layer 26 having an entrance face 29 on which the radiation of the scanning device enters the record carrier. The record carrier 25 also comprises an information layer 27 and a protective layer 28. The second type of record carrier is the record carrier 1 shown in Figure 1, having the transparent layer 2, information layer 3 and protective layer 4. The information layers 3 and 27 may have different or similar information densities and the information may be stored in different or similar types of marks in different or similar formats. The thickness of transparent layer 2 is larger than that of transparent layer 26. The thickness of the transparent layer 26 may be zero, making the record carrier a so-called air-incident record carrier 30, as shown in Figure 3, and comprising an information layer 31 and a protective layer or substrate 32. In a particular example, the transparent layer 26 is a 100 $\mu$m thickness poly-carbonate foil and the transparent layer 2 is a 600 $\mu$m thickness polycarbonate layer, whereas the information density of the information layer 27 is higher than that of information layer 3. The gap between the convex lens 11 and the entrance surface 5 is chosen sufficiently small to realize the required high numerical aperture of the radiation beam 15 and sufficiently large to avoid crashes of the plano-convex lens 11 or its holder against the record carrier.

When the scanning is changed from a record carrier 25 of the first type to a record carrier I of the second type, the convex lens 11 is positioned at the same height above the entrance face 5 as it had above the entrance face 29. The axial position of the objective lens 10 is controlled by the focus servo system such that the focus 16 coincides with the information layer 27. The positioning of both lenses 10 and 11 will have changed the distance between them in such a way that the lenses compensate the change in spherical aberration caused by the change in thickness of the transparent layer. Since the gap between the plano-convex lens 11 and the entrance face of both types of record carrier is substantially the same, the dynamic behaviour of the optical head will also be very similar for both types of record carrier.

**Figure 4** shows an objective lens 45 and a convex lens 46 for the above scanning device. The wavelength of the radiation is 650 nm. The numerical aperture for scanning the record carrier 25 having a 100 $\mu$m polycarbonate transparent layer is equal to 0.85. The numerical aperture for scanning the record carrier 1 having a 600 $\mu$m polycarbonate transparent layer is equal to 0.60. The refractive index of polycarbonate at 650 nm wavelength is equal to 1.5806. The plano-convex lens 46 is made of the Schott glass FK3 with a refractive index of 1.46 and one flat surface. The radius of curvature of the convex surface of the lens 46 is 1.25 mm, and the thickness of the lens on the optical axis is equal to 1.25 mm. The value of $n_1 B$ for the lens 11 is 0.985. The distance between the plano surface 47 and the entrance face 29 of the record carrier 25 is designed to be 100 $\mu$m. When the scanning is changed to record carrier 1, the distance between the plano surface and the entrance face 5 changes to 93 $\mu$m to obtain optimum spherical aberration compensation, i.e. a change of only 7 $\mu$m on a distance of 100 $\mu$m. Hence, keeping the air gap equal to 100 $\mu$m will result in an effective spherical aberration compensation when changing from a record carrier of the first type to one of the second type.

The objective lens 45 is made of Schott glass LAKN22, having a refractive index of 1.648. The convex surface 48 of the objective lens has a radius of curvature $r_1$ equal to 2.429 mm, the concave surface 49 a radius of curvature $r_2$ equal to 180.368 mm. The thickness of the lens on the optical axis is 1.9 mm. The distance on the optical axis between the lenses 45 and 46 is 0.010 mm when scanning through the 600 $\mu$m transparent layer of record carrier 1 and 0.985 mm when scanning through the 100 $\mu$m transparent layer of record carrier 25. Both surfaces 48 and 49 have an aspheric profile, described by the following equation:

$$z = \frac{c_1 r^2}{1 + \sqrt{1 - (c_1 r)^2}} + a_2 r^2 + a_4 r^4 + a_6 r^6 + \ldots$$

where $c_1 = 1/r_1$ for surface 48 and $c_1 = 1/r_2$ for surface 49, z is the coordinate along the optical axis and r is the radial coordinate perpendicular to the optical axis, as indicated in the figure. The values of the coefficients $a_2$ to $a_{16}$ are as follows

| Surface 48 | Surface 49 |
|---|---|
| $a_4 = -0.00064031138$ | $a_4 = 0.018413388$ |
| $a_6 = -0.002214109$ | $a_6 = -0.023037169$ |
| $a_8 = -0.00013925445$ | $a_8 = 0.0171954$ |
| $a_{10} = 0.00029925671$ | $a_{10} = -0.0071408498$ |
| $a_{12} = -0.00010404658$ | $a_{12} = 0.0015024416$ |
| $a_{14} = 1.2246551\ e\text{-}5$ | $a_{14} = -0.00012458591$ |
| $a_{16} = -5.0598072\ e\text{-}7$ | $a_{16} = 0$ |

The scanning device is also eminently suitable for scanning a multi-layer record carrier 35 as shown in Figure 3. The record carrier comprises a transparent layer 36 with an entrance face 37, two information layers 38 and 39, separated by a transparent spacer layer 40, and a protective cover layer 41. The spacer layer may be a foil glued between the information layers or a UV-hardened spin-coated layer having a thickness of 30 $\mu$m. The material of the spacer layer may be a polymer such as poly-carbonate having a refractive index 1.58. When the scanning is changed from information layer 38 to information layer 39, the objective lens 10 is moved axially such that the focus 16 is displaced from information layer 38 to information layer 39. The distance between the plano-convex lens 11 and the entrance face 37 of the record carrier does not change, i.e. the free working distance stays approximately the same. The change in distance between the objective lens 10 and the plano-convex lens 11 introduces spherical aberration that compensates the spherical aberration due to the spacer layer 40. The combination of the objective lens and the plano-convex lens operates as an adjustable spherical aberration compensator.

**Claims**

1.  An optical scanning device for optically scanning a first and second type of record carrier (25,1), the first type of record carrier (25) comprising a first information layer (27) and a first transparent layer (26) having a first thickness, the second type of record carrier (1) comprising a second information layer (3) and a second transparent layer (2) having a refractive index $n_1$ and a second thickness larger than the first thickness, the device comprising an objective lens (10) and a convex lens (11) for converging a radiation beam through the first or second transparent layer to a focus on the information layer, and means (22) for axially positioning the convex lens, the convex lens having a convex surface facing the objective lens, a substantially planar surface facing the transparent layer, a magnifying power and a refractive index $n_2$, **characterized in that** the magnifying power of the convex lens is substantially equal to $1/n_1$, and the means (22) maintain the distance between the convex lens and the record carrier at a predetermined value.

2.  Optical scanning device according to Claim 1, wherein the value of $n_1$ is larger than the value of $n_2$.

3.  Optical scanning device according to Claim 2, wherein the refractive indices $n_1$ and $n_2$ are related through $(n_1\text{-}1) > 1.03\ (n_2\text{-}1)$.

4.  An optical scanning device for optically scanning a record carrier (35) comprising at least two superjacent information layers (38, 39) and a transparent spacer layer (40) having a refractive index $n_1$ arranged between the information layers, the device comprising an objective lens (10) and a convex lens (11) for converging a radiation beam to a focus on one of the information layers, and means (22) for axially positioning the convex lens, the convex lens having a convex surface facing the objective lens, a substantially planar surface facing the transparent layer, a magnifying power and a refractive index $n_2$, **characterized in that** the magnifying power of the convex lens is substantially equal to $1/n_1$, and the means (22) maintain the distance between the convex lens and the record carrier at a predetermined value.

**5.** Optical scanning device according to Claim 4, wherein the value of $n_1$ is larger than the value of $n_2$.

**6.** Optical scanning device according to Claim 5, wherein the refractive indices $n_1$ and $n_2$ are related through $(n_1-1) > 1.03 (n_2-1)$.

## Patentansprüche

**1.** Optische Abtasteinrichtung zum optischen Abtasten eines Aufzeichnungsträgers (25, 1) einer ersten und zweiten Art, wobei die erste Art von Aufzeichnungsträger (25) eine erste Informationsschicht (27) und eine erste transparente Schicht (26) mit einer ersten Dicke umfasst, und die zweite Art von Aufzeichnungsträger (1) eine zweite Informationsschicht (3) und eine zweite transparente Schicht (2) mit einem Brechungsindex $n_1$ und einer zweiten Dicke größer als der ersten Dicke umfasst, wobei die Einrichtung eine Objektivlinse (10) und eine konvexe Linse (11) zum Konvergieren eines Strahlenbündels durch die erste oder zweite transparente Schicht hindurch auf einen Brennpunkt auf der Informationsschicht sowie Mittel (22) zum axialen Positionieren der konvexen Linse umfasst, wobei die konvexe Linse eine der Objektivlinse zugewandte konvexe Oberfläche, eine im Wesentlichen ebene, der transparenten Schicht zugewandte Oberfläche, eine Vergrößerungsleistung und einen Brechungsindex $n_2$ hat, **<u>dadurch gekennzeichnet, dass</u>** die Vergrößerungsleistung der konvexen Linse im Wesentlichen dem Wert $1/n_1$ entspricht und die Mittel (22) den Abstand zwischen der konvexen Linse und dem Aufzeichnungsträger auf einem vorgegebenen Wert aufrechterhalten.

**2.** Optische Abtasteinrichtung nach Anspruch 1, wobei der Wert von $n_1$ größer als der Wert von $n_2$ ist.

**3.** Optische Abtasteinrichtung nach Anspruch 2, wobei die Brechungsindizes $n_1$ und $n_2$ durch den Ausdruck $(n_1-1) > 1,03 (n_2-1)$ miteinander in Beziehung stehen.

**4.** Optische Abtasteinrichtung zum optischen Abtasten eines Aufzeichnungsträgers (35), der mindestens zwei übereinander liegende Informationsschichten (38, 39) und eine zwischen den Informationsschichten angeordnete transparente Trennschicht (40) mit einem Brechungsindex $n_1$ umfasst, wobei die Einrichtung eine Objektivlinse (10) und eine konvexe Linse (11) zum Konvergieren eines Strahlenbündels auf einen Brennpunkt auf einer der Informationsschichten und Mittel (22) zum axialen Positionieren der konvexen Linse umfasst, wobei die konvexe Linse eine der Objektivlinse zugewandte konvexe Oberfläche, eine im Wesentlichen ebene, der transparenten Schicht zugewandte Oberfläche, eine Vergrößerungsleistung und einen Brechungsindex $n_2$ hat, **dadurch gekennzeichnet, dass** die Vergrößerungsleistung der konvexen Linse im Wesentlichen dem Wert $1/n_1$ entspricht und die Mittel (22) den Abstand zwischen der konvexen Linse und dem Aufzeichnungsträger auf einem vorgegebenen Wert aufrechterhalten.

**5.** Optische Abtasteinrichtung nach Anspruch 4, wobei der Wert von $n_1$ größer als der Wert von $n_2$ ist.

**6.** Optische Abtasteinrichtung nach Anspruch 5, wobei die Brechungsindizes $n_1$ und $n_2$ durch den Ausdruck $(n_1-1) > 1,03 (n_2-1)$ miteinander in Beziehung stehen.

## Revendications

**1.** Dispositif de balayage optique pour balayer optiquement un premier et un second type de support d'enregistrement (25, 1), le premier type de support d'enregistrement (25) comprenant une première couche d'information (27) et une première couche transparente (26) ayant une première épaisseur, le second type de support d'enregistrement (1) comprenant une seconde couche d'information (3) et une seconde couche transparente (2) ayant un indice de réfraction $n_1$ et une seconde épaisseur qui est supérieure à la première épaisseur, le dispositif comprenant une lentille d'objectif (10) et une lentille convexe (11) pour faire converger un faisceau de rayonnement à travers la première ou la seconde couche transparente vers un foyer sur la couche d'information, et des moyens (22) pour le positionnement axial de la lentille convexe, la lentille convexe ayant une surface convexe qui se situe vis-à-vis de la lentille d'objectif, une surface planaire qui se situe vis-à-vis de la couche transparente, un grossissement et un indice de réfraction $n_2$, **caractérisé en ce que** le grossissement de la lentille convexe est sensiblement égal à $1/n_1$ et **en ce que** les moyens (22) maintiennent la distance comprise entre la lentille convexe et le support d'enregistrement à une valeur prédéterminée.

**2.** Dispositif de balayage optique selon la revendication 1, dans lequel la valeur de $n_1$ est supérieure à la valeur de $n_2$.

**3.** Dispositif de balayage optique selon la revendication 2, dans lequel les indices de réfraction $n_1$ et $n_2$ sont de préférence apparentés à travers $(n_1-1) > 1,03 (n_2-1)$.

**4.** Dispositif de balayage optique pour balayer optiquement un support d'enregistrement (35) comprenant au moins deux couches d'information sus-jacentes (38, 39) et une couche intermédiaire transparente (41) ayant un indice de réfraction $n_1$ qui est agencée entre les deux couches d'information, le dispositif comprenant une lentille d'objectif (10) et une lentille convexe (11) pour faire converger un faisceau de rayonnement vers un foyer sur une des couches d'information et des moyens (22) pour le positionnement axial de la lentille convexe, la lentille convexe ayant une surface convexe qui se situe vis-à-vis de la lentille d'objectif, une surface sensiblement planaire faisant face à la couche transparente, un grossissement et un indice de réfraction $n_2$, **caractérisé en ce que** le grossissement de la lentille convexe est sensiblement égale à $1/n_1$ et **en ce que** les moyens (22) maintiennent la distance comprise entre la lentille convexe et le support d'enregistrement à une valeur prédéterminée.

**5.** Dispositif de balayage optique selon la revendication 4, dans lequel la valeur de $n_1$ est supérieure à la valeur de $n_2$.

**6.** Dispositif de balayage optique selon la revendication 5, dans lequel les indices de réfraction $n_1$ et $n_2$ sont apparentés à travers $(n_1-1) > 1,03 (n_2-1)$.

FIG. 1

## FIG. 2

## FIG. 3

## FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0727777 A
- US 5691971 A
- US 5764613 A